# EUROPEAN PATENT APPLICATION

(11) **EP 3 709 130 A1**
(43) Date of publication of application: **16.09.2020**
(21) Application number: 20150011.3
(22) Date of filing: 02.01.2020
(51) Int. Cl.: G06F 1/26, G06F 1/30, G06F 1/16

(54) **DOCK FOR A PORTABLE ELECTRONIC DEVICE WITH AN ALTERNATIVE POWER SOURCE**

(30) Priority: 13.03.2019 US 201916352477
(71) Applicant: ACCO Brands Corporation, Lake Zurich, IL 60047-8997 (US)
(72) Inventor: CHANG, Chia Yi, 220 New Taipei City (TW); HUNG, Chia-Cheng, 33046 Taoyuan City (TW); HUANG, Yu-Chia, 23742 New Taipei City (TW)
(74) Representative: Beattie, Alex Thomas Stewart

(57) **Abstract**

A dock for a portable electronic device including a base, a controller, and a locking element configured to engage the portable electronic device. The locking element includes an electronic actuator configured to unlock the locking element. The controller includes a power supply in electronic communication with a utility power input connection and an external power source input connection. The power supply is configured to receive power from either the utility power input connection or the external power source input connection. The electronic processor is configured to receive an indication to unlock the locking element, and to provide power to the electronic actuator to unlock the locking element upon receiving the indication. The external power input is provided to the power supply from the external power source input connection based on no utility power input being present at the utility power input connection.

## Description

### FIELD OF THE INVENTION

The present invention relates to a dock having a locking mechanism for a portable electronic device and, more particularly, to a dock having an ability to interface with an alternative power source.

### SUMMARY

In one embodiment, the invention provides a dock for a portable electronic device. The dock includes a base and a locking element that is configured to engage the portable electronic device. The locking element is further configured to operate in a locked condition and an unlocked condition and includes an electronic actuator configured to unlock the locking element. The dock further includes a controller. The controller includes an electronic processor, a memory coupled to the electronic processor, and a power supply in electric communication with a utility power input connection that is configured to receive a utility power input. The power supply is further in communication with an external power source input connection configured to receive an external power input. The power supply is configured to receive power form one of the utility power input connection and the external power source input connection and to provide power to one or more electrical components within the dock. The electronic processor is configured to receive an indication from a user to unlock the locking element, and determine if the utility power input is present at the utility power input connection. The electronic processor is further configured to provide power to the electronic actuator from the power supply to unlock the locking element upon receiving the indication, wherein the external power input is provided to the power supply from the external power source input connection based on no utility power input being present at the utility power input connection.

In another embodiment, the invention provides a system for securing a portable electronic device. The system includes an external power supply and a dock configured to interface with the portable electronic device. The dock includes a base and a locking element that is configured to engage the portable electronic device. The locking element is further configured to operate in a locked condition and an unlocked condition and includes an electronic actuator configured to unlock the locking element. The dock further includes a proximity sensor configured to receive an indication to unlock the locking members and a controller. The controller includes an electronic processor, a memory coupled to the electronic processor, and a power supply in electric communication with a utility power input connection that is configured to receive a utility power input. The power supply is further in communication with an external power source input connection configured to receive an external power input. The power supply is configured to receive power form one of the utility power input connection and the external power source input connection and to provide power to one or more electrical components within the dock. The electronic processor is configured to receive an indication from a user to unlock the locking element, and determine if the utility power input is present at the utility power input connection. The electronic processor is further configured to provide power to the electronic actuator from the power supply to unlock the locking element upon receiving the indication, wherein the external power input is provided to the power supply from the external power source input connection based on no utility power input being present at the utility power input connection.

In yet another embodiment, the invention provides a method for securing a portable electronic device within a dock. The method includes engaging a locking element to lock the portable electronic device into the dock, wherein the locking element is configured to operate in a locked condition and an unlocked condition. The locking element includes an electronic actuator configured to unlock the locking element. The method further includes receiving a signal, at an electronic processor, to unlock the locking element, and determining, at the electronic processor, if the dock is connected to a utility power source. When the dock is connected to a utility power source, the method includes providing power to the electronic actuator from the utility power source, and actuating the electronic actuator to move the locking element to the unlock condition. When the dock is not connected to the utility power source, the method includes coupling an external power source to an external power source input connection of the dock, providing power to the electronic actuator from the external power source, and actuating the electronic actuator to move the locking element to the unlocked condition.

Other aspects of the invention will become apparent by consideration of the detailed description and accompanying drawings.

### BRIEF DESCRIPTION OF THE DRAWINGS

Fig. 1 is a perspective view of a dock for securing a portable electronic device, according to some embodiments.
Fig. 2 is a top cross-sectional view of the dock illustrating select internals of the dock of Fig. 1, according to some embodiments.
Fig. 3 is a perspective view of the dock of Fig. 1 communicating with a remote apparatus, according to some embodiments.
Fig. 4 is a perspective view of the dock of Fig. 1 and a portable electronic device communicating with the remote apparatus, according to some embodiments.
Fig. 5 is a perspective view of a dock of an alternative embodiment, the dock including an electronic lock mechanism.
Fig. 6 is a perspective view of the dock shown in Fig. 5 with the electronic lock mechanism exploded away from the dock, according to some embodiments.
Fig. 7 is schematic view of a dock device having an electronic locking mechanism, according to some embodiments.
Fig. 8 is a schematic view of the dock device of Fig. 7 receiving power via an external power source, according to some embodiments.
Fig. 9 is a flow chart illustrating a method for operating a dock having an electronic locking mechanism, according to some embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

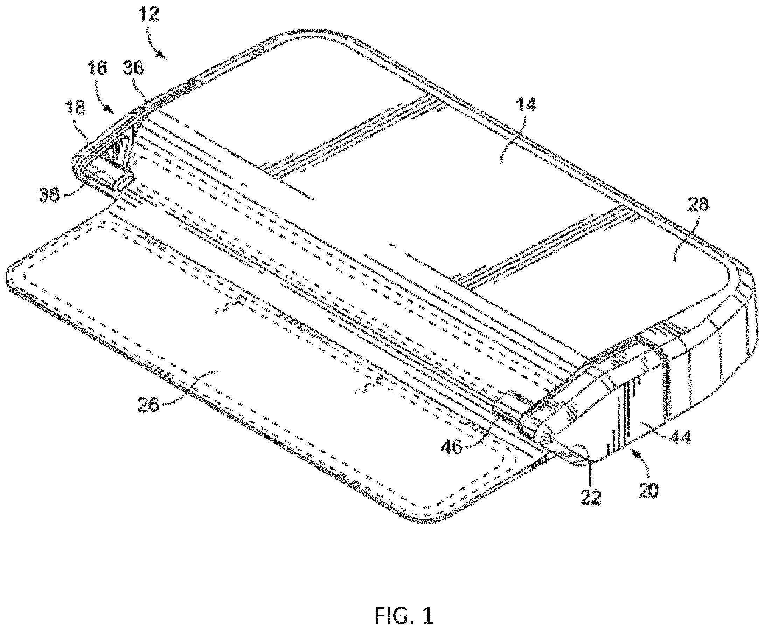

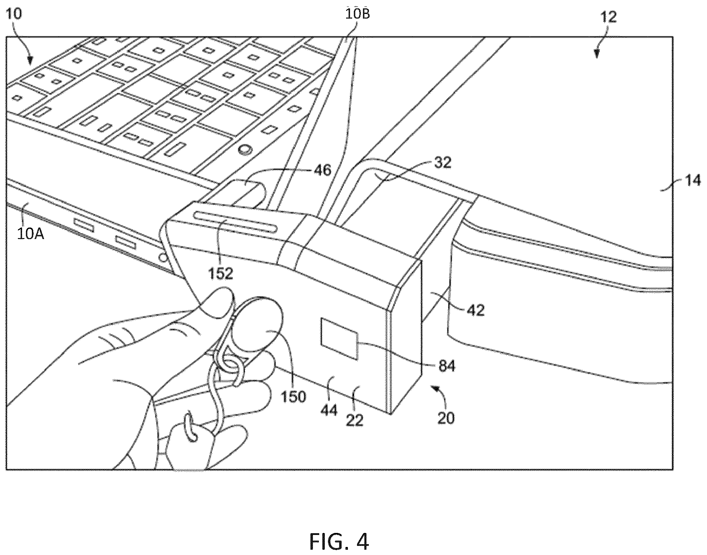

Fig. 1 illustrates a dock 12 for use with a portable electronic device 10 (FIG. 4). The electronic device 10 is securable to the dock 12 via first and second arms 16, 20 that are movably supported on and extend into a base 14 and around a portion of the electronic device 10 to inhibit unwanted removal of the electronic device 10 from the dock 12. In the illustrated embodiment, the portable electronic device 10 is a portable computer such as a laptop or notebook computer. In other embodiments, the portable electronic device 10 may be another electronic device having a hinge. In other examples, the portable electronic device 10 may be a non-hinged electronic device, such as a tablet computer. The electronic device 10 may include a display portion 10B and a user interface portion 10A (FIG. 4).

As shown in Fig. 1, the first arm 16 includes a first hook 18 and the second arm 20 includes a second hook 22. When the portable electronic device 10 is positioned on the dock 12 (e.g., against a support platform 26 and a housing 28 of the dock 12), the arms 16, 20 extend around opposing edges of the portable electronic device 10. More specifically, the arms 16, 20 extend around a portion of the rear, respective sides, and the front of the portable electronic device 10. In combination with the structure of the base 12, the arms 16, 20 inhibit unwanted removal of the portable electronic device 10 from the dock 12.

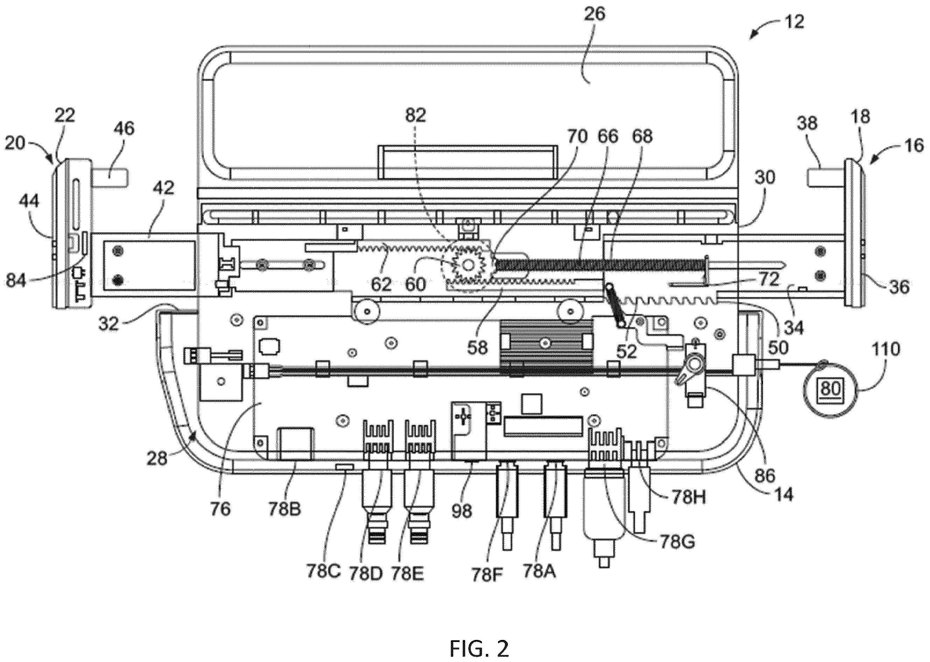

As shown in Fig. 2, the base 14 includes a housing 28 defining an interior volume in which a plurality of electrical and mechanical components are located. The housing 28 includes openings 30, 32 on opposing sides of the base 14. The first arm 16 extends into and is slidable relative to the first opening 30, and the second arm 20 extends into and is slidable relative to the opposing second opening 32. In other embodiments, only one of the arms 16, 20 may be movable or slidable relative to the base 14, and the other one of the arms 16, 20 may be fixed relative to the base 14 (i.e., not slidable or movable). As the arms 16, 20 slide inward within the base 14 (i.e., the hooks 18, 22 translate closer to one another), the gap between the hooks 18, 22 decreases. When the gap between the hooks 18, 22 is greater than the width of the electronic device 10, this is an unlocked position in which the electronic device 10 is insertable and removable from the dock 12. When the gap between the hooks 18, 22 is less than the width of the electronic device 10, this is a locked position in which the electronic device 10 is inhibited from being removed from the dock 12. When the dock 12 is in the locked position with no electronic device 10 positioned on the dock 12, the hooks 18, 22 further inhibit insertion of an electronic device 10 onto the dock 12.

The first arm 16, as described below, is the left arm shown in Fig. 1 (e.g., the first arm 16 surrounds the left side of the screen of the electronic device 10 from a perspective in front of the screen). In other embodiments, the first arm 16 can be the right arm. Likewise, the second arm 20, as described below, is the right arm (e.g., the second arm 20 surrounds the right side of the screen of the electronic device 10 from a perspective in front of the screen). In other embodiments, the second arm 20 can be the left arm. In some embodiments, the dock 12 may only include one arm (e.g., the first arm 16), and the second arm 20 may be replaced by a hook or other suitable structure fixed to the dock 12.

The first arm 16 includes a main body 34 that extends into the first opening 30 and is capped by the first hook 18 at a distal end of the arm 16 (i.e., the end located outside of the housing 28 when assembled, as shown in Figs. 1-2). The first hook 18 includes a plate 36 extending from and attached to the main body 34 and a protrusion 38 extending from the plate 36 parallel to the lengthwise direction of the main body 34. When the portable electronic device 10 is mounted to the dock 12, the main body 34 is positioned behind a display portion 10B, the plate 36 extends around a side of the display portion 10B, and the protrusion 38 is positioned in front of a portion of the display portion 10B. In the illustrated embodiment, the first hook 18 is permanently attached to the main body 34, and the plate 36 of the first hook 18 is permanently attached to the protrusion 38. For example, the main body 34, the plate 36, and the protrusion 38 may be integrally formed, molded, welded, glued, bolted, or otherwise secured together to form the first arm 16.

The second arm 20 is similar to (and mirrored relative to) the first arm 16 except as otherwise described. The second arm 20 includes a main body 42 that extends into the second opening 32 and is capped by the second hook 22 at a distal end of the arm 20 (i.e., the end located outside of the housing 28 when assembled, as shown in Figs. 1-2). Similar to the first hook 18, the second hook 22 includes a plate 44 extending from and attached to the main body 42 and a protrusion 46 extending from the plate 44. As shown in Fig. 2, the plate 44 of the second arm 20 has a greater thickness than the plate 36 of the first arm 16. The plate 44 defines a housing in which one or more electronic components are located. As described in greater detail below, the plate 44 can house a proximity sensor, antenna, wireless transceiver, and/or other sensors configured to sense a presence of a remote apparatus, such as a key fob or smartphone.

As shown in Fig. 2, the main body 34 of the first arm 16 includes a ratchet gear set 50. The ratchet gear set 50 includes a plurality of teeth 52 extending along at least a portion of a length of the main body 34. The illustrated gear set 50 is formed on a rear-facing side (nearer the rear of the dock 12, away from the support platform 26) of the main body 34.

The main body 34 of the first arm 16 further includes a rack 58 extending in the lengthwise direction of the arm 16 toward a center of the base 14. The rack 58 engages a pinion gear 60. The pinion gear 60 is positioned on, coupled to, and rotatable relative to the base 14. Therefore, when the first arm 16 is translated relative to the base 14, the rack 58 translates relative to the base 14 and relative to the pinion gear 60. As the rack 58 is engaged with the pinion gear 60, translation of the rack 58 results in rotation of the pinion gear 60.

The second arm 20 further includes a rack 62 that is engaged with the pinion gear 60 to couple movement of the first arm 16 to the second arm 20. Therefore, when the first arm 16 and the first hook 18 are translated inward toward the base 14 in a first direction, the second arm 20 and the second hook 22 are likewise translated inward toward the base 14 (e.g., decreasing the gap between the opposing hooks 18, 22). Similarly, when the first arm 16 and the first hook 18 are translated away from the base 14 in a second direction, the second arm 20 and the second hook 22 are likewise translated away from the base 14 (e.g., increasing the gap between the opposing hooks 18, 22).

In the illustrated embodiment, a dampener 82 is coupled to the pinion gear 60. The dampener 82 limits the rotational speed of the pinion gear 60, thereby dampening the motion (e.g., limiting the speed) of the arms 16, 20 as the arms 16, 20 translate relative to the base 14. As shown, the dampener 82 is coaxial with the pinion gear 60 and is located below the pinion gear 60 within the base 14. In the illustrated embodiment, the dampener 82 is a rotary dampener. In other embodiments, other suitable dampeners may be used, or the dampener 82 may be omitted.

The dock 12 further includes a spring 66 to bias the first arm 16 toward an unlocked position (i.e., biasing the first arm 16 and the first hook 18 away from the base 14). As shown, the spring 66 is a linear compression spring. The spring 66 is positioned around a post 68 (i.e., the post 68 is positioned within the inner diameter of the spring 66) to limit the movement of the spring 66 to linear motion parallel to the translation direction of the first arm 16. A first end of the spring 66 abuts a first stop 70 at the base 14 to define a limit for the spring 66 relative to the base 14. A second end of the spring 66 abuts a second stop 72 at the first arm 16. The second stop 72 defines a limit for the spring 66 relative to the first arm 16. The second stop 72 is movable with the arm 16 relative to the first stop 70 such that the spring 66 is able to expand and contract with translation of the first arm 16. As movement of the first arm 16 is coupled to movement of the second arm 20 via the pinion gear 60, when the spring 66 biases the first arm 16 and the first hook 18 away from the base 14, the spring 66 further biases the second arm 20 and the second hook 22 away from the base 14. Likewise, the spring 66 is compressed when either of the arms 16, 20 and hooks 18, 22 are moved toward the base 14. The spring 66 overcomes the friction of the dampener 82 to move the arms 16, 20 relative to the base 14 at a controlled and predetermined speed (based on the characteristics of the dampener 82). Such an arrangement inhibits the arms 16, 20 from abruptly popping out of the base 14 under the influence of the spring 66.

The dock 12 includes an electrical connector 78A for electrically coupling the portable electronic device 10 to the dock 12. The electrical connector 78A attaches to the portable electronic device 10 via a cable (e.g., a USB-C cable) or may otherwise be fixed within the base 14 to directly connect to a port of the portable electronic device 10. The base 14 further supports a plurality of electric components within the interior volume of the base 14. A circuit board or controller 76 includes a plurality of ports 78B-78H for electrically coupling electrical cables such as power cables, USB cables, or HDMI cables to the electronic device 10 via the electrical connector 78A. As shown, the controller 76 includes a network port 78B, a headphone or speaker jack 78C, a first plurality of USB ports 78D, a second plurality of USB ports 78E, a USB-C port 78F, a video output port 78G (e.g., DisplayPort, HDMI port), and a power port 78H. The dock 12 therefore functions as a port replicator so that various electrical cables and peripherals (e.g., flash drives, keyboards, mice, power adapters, etc.) can be plugged into ports 78B-78H of the dock 12 in addition to or instead of the ports on the portable electronic device 10, directly. Further, the dock 12 may support more ports 78B-78H than are found directly on the portable electronic device 10. In some embodiments, the rear of the dock 12 (near the ports 78B-78H) may further include an opening 98 (e.g., a K-slot) utilized to physically couple the dock 12 to an immovable object 80 via a security cable 110.

As discussed briefly above, the plate 44 of the second arm 20 includes an interior space for supporting another electric component: a proximity device 84 including one or more of a proximity sensor, an antenna, and a wireless transceiver. The proximity device 84 wirelessly communicates with a key fob or another remote apparatus to provide a lock signal and/or unlock signal to the dock 12. The proximity device 84 is electrically coupled to the circuit board 76. In other embodiments, the proximity device 84 may be located within the base 14.

The base 14 of the dock 12 supports an electronic actuator 76 within the interior volume of the base 14. The electronic actuator 86 is actuatable via a signal from the proximity device 84, from the circuit board 76, and/or from the portable electronic device 10. The electronic actuator 86 may be embodied as, for example, an electric motor, such as a servomotor, or a solenoid. In other embodiments, other suitable electronic or electro-mechanical actuators may be used. The electronic actuator may be mechanically coupled to one or more components within the dock 12, and may be configured to manipulate one or more components within the dock 12 in order to engage or disengage a locking function of the dock. The locking function may be configured to prevent the slidable operation of one or more of the arms 16, 20. Specifically, the arms 16, 20 may be locked into either the locked position or unlocked position, as described above.

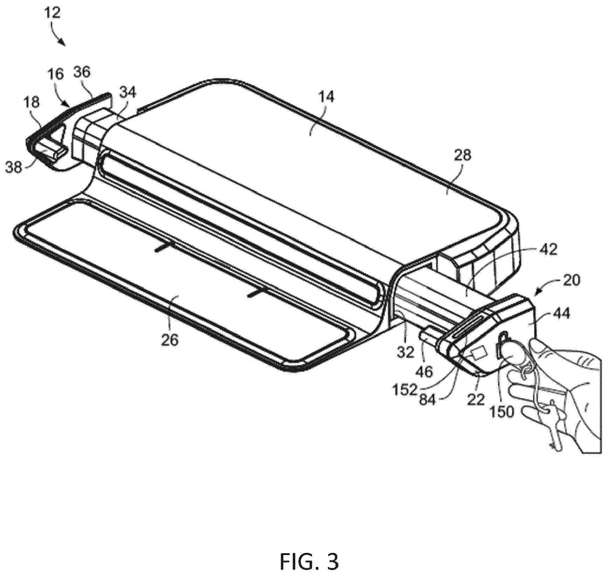

Figs. 3-4 illustrate the dock 12 discloses above with respect to Figs. 1 and 2. As shown, a remote apparatus 150, such as an RFID or NFC device (e.g. fob, key card, etc.) or other portable electronic devices such as cellphones and/or smartphones may be utilized to lock/unlock the dock 12, as described herein. The remote apparatus 150 may be assigned to a specific portable electronic device 10, or user such that an administrator can match the remote apparatus 150 to a specific user or device. A feedback indicator 152 may be located on the dock 12. More specifically, the feedback indicator 152 may be positioned on the plate 44 of the arm 20. The feedback indicator 152 may be an illumination device (e.g. one or more LEDs), an audio indicator, a haptic feedback indicator, or any combination thereof.

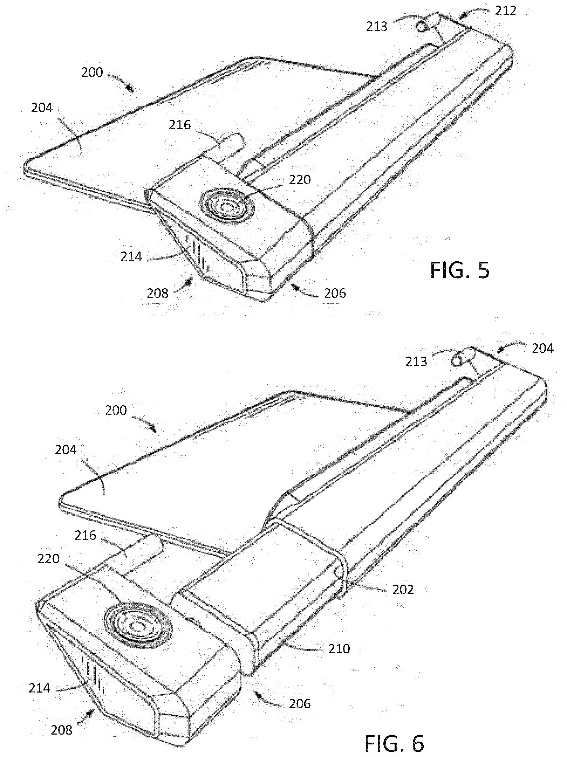

Turning now to Figs. 5 and 6, an alternative dock 200 is shown, which is configured to provide a locking mechanism for the electronic device 10. Similar to dock 12, above, the electronic device 10 is secured to the dock 200 to selectively inhibit removal of the device from the dock 200. The dock 200 includes a channel 202 and a support platform 204, and a single translatable arm 206, having a hook 208 and a body portion 210 slidable within the channel 202. It may be noted that the single arm 206 extends into the opposite end of the channel 202, as opposed to the operation of dock 12, above. However, in some embodiments, the dock 200 may have multiple arms slidable within the channel 202. Further, the dock 200 includes an additional hook 212, which caps one end of the channel 202. The additional hook 212 may be integrally formed or permanently attached (e.g., heat staked, friction welded, etc.) to the channel 202. In other embodiments, the position of the arm 206 and the hook 212 relative to the channel 202 may be reversed. The additional hook 212 may further include an additional protrusion 213 for extending around a portion of the portable electronic device 10.

The arm 206 includes a side door 214, extending from the body portion 210 and supporting a protrusion 216 for extending around a portion of the portable electronic device 10. The side door 214 and the attached protrusion 216 may be removable from the body portion 210 of the arm 206, in one embodiment. In other embodiments, the side door 214 and the protrusion 216 may be movable (e.g. slidable) relative to the body portion 210, but not fully removable. For example, the side door 214 may be movable away from the body portion 210, to provide clearance for attaching a portable electronic device to or disconnecting a portable electronic device from the dock 200.

The dock 200 may further include an electronic lock mechanism 218. The electronic lock mechanism 218 may be selectively actuated via an interface 220 to lock or unlock the side door 214 to the body portion 210 of the arm 206 and thereby to the remainder of the dock 200. The interface 220 for the electronic lock mechanism 218 may be a button that is actuatable when a wireless key, such as an RFID, NFC, or Bluetooth device, is within a prescribed distance to the dock 200. In some examples, the button may be actuatable by a user when the user uses a key or other mechanical interlock within the dock 200 to allow the button to be actuated. Alternatively, the interface 220 may be unlockable in response to inputting a password, passcode, or other security identifier into the associated portable electronic device. In some examples, a command from the portable electronic device, may provide the signal to the electronic lock mechanism 218 to lock or unlock the side door 214. Further still, the interface 220 may be a biometric sensor and may respond to a user scan (e.g. fingerprint scan, retinal scan, etc.) to actuate the electronic lock mechanism 218. In some examples, a command from the portable electronic device, may provide the signal to the electronic lock mechanism 218 to lock or unlock the side door 214. In some embodiments, the side door 214 may include a controller, as described below, as well as a proximity device (such as proximity device 84) to allow for wireless communication with a key fob or other remote apparatus to provide a lock signal and/or unlock signal to the dock 200. While not shown, the dock 200 may include an internal power source (e.g. battery) or external power connection to provide power to the dock 200. Finally, while not described herein, the electronic lock mechanism may include multiple electronic lock configurations applicable to locking and unlocking the side door 214 to the body portion 210 of the arm 206.

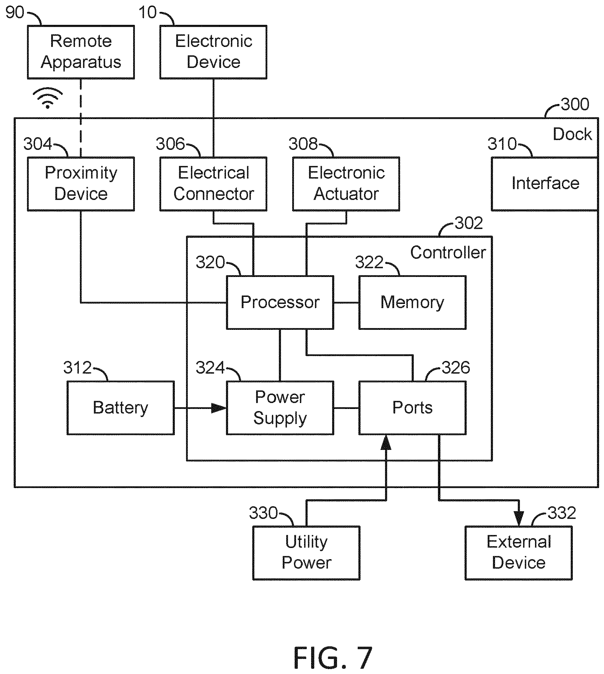

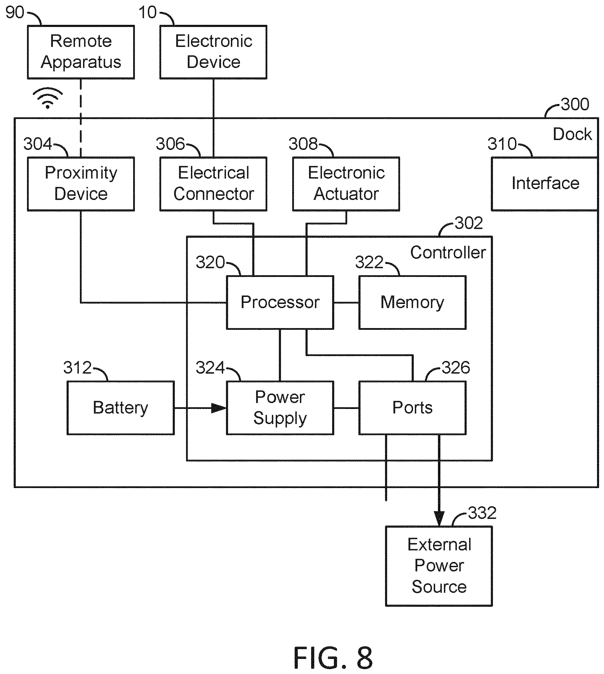

Turning now to Figs. 7 and 8, schematic representations of a dock 300 are shown, according to some embodiments. The dock 300 may be similar in constructions to docks 12 and 200, described above. As shown in Fig. 7, the dock 300 includes a controller 302. The controller 302 may be similar to the controller 76, described above. The controller 302 may include a proximity device 304, one or more electrical connectors 306, one or more electronic actuators 308, one or more interface devices 310, and an internal power source (e.g. battery) 312. The proximity device 304 may be similar to the proximity device 84 described above, and is configured to receive a wireless signal from a remote apparatus (e.g. fob, key card, smartphone, cellphone, etc.). The one or more electrical connectors 306 are configured to connect to the electronic device 10. The electrical connectors 306 may be similar to the electrical connector 74 described above, and may include various connector types, such as USB-C, USB-A, Firewire, Lightning Bolt, or other applicable data/power connections. In some embodiments, where the electrical connector 306 is a USB-C type connection, two-way power transfer may be enabled, allowing power to flow to the electronic device 10 from the dock 300, and vice versa. The electronic actuator 308 may be similar to the electronic actuators described above. In one embodiment, the interface device 310 is similar to the interface 152, described above, and can be used to initiate a locking or unlocking process, as will be described in more detail below.

The controller 302 includes an electronic processor 320, a memory 322, a power supply 324 and one or more input/output (I/O) ports 326. The electronic processor 320 is electrically coupled to the electronic actuator 308 and to the proximity device 304. The electronic processor 320 may be implemented as a programmed microprocessor, an application specific integrated circuit (ASIC), one or more field programmable gate arrays (FPGA), a group of processing components, or with other suitable electronic processing components. In one embodiment, the electronic processor 320 is configured to store wireless signals received by the proximity device 304 from the remote apparatus 90, as described above, within the memory 322 as a registered signal. The electronic processor 320 is further in electrical communication with the power supply 324, the electronic device 10 (via the electrical connector 306) and the I/O ports 326.

The memory 322 (for example, a non-transitory, computer-readable medium) includes one or more devices (for example, RAM, ROM, Flash memory, hard disk storage, etc.) for storing data and/or computer code for completing or facilitating the various processes, layers, and modules described herein. The memory 322 may be or include volatile memory or nonvolatile memory. The memory 322 may include database components, object code components, script components, or any other type of information structure for supporting the various activities and information structure described in the present application. According to one example, the memory 322 is communicable connected to the electronic processor 320, and may include computer code for executing one or more processes described herein.

The power supply 324 may be configured to regulate one or more power inputs provided to the controller. For example, power may be provided to the controller 302 via the internal power source 312 or via external connections to a utility power source 330 or an external power source, as will be described in more detail below. As shown in Fig. 7, power is provided to the controller 302 via the utility power source 330 (e.g. an AC wall outlet). For example, the utility power source 330 may be provided via a dedicated power port such as power port 78H, described above. The power supply 324 may be configured to convert the received power (e.g. AC or DC) into multiple voltages required within the dock 300. For example, the power supply 324 may be configured to transmit power to the electronic processor 320, as well as to other components, such as the I/O ports 326, the electrical connector 306, the proximity device 304, the electronic actuator 308 and/or the interface 310. In some configurations, the electronic processor 320 may be selectively transmit power from the power supply 324 to the various components of the dock 300. In some embodiments, the power supply 324 can provide power to the electronic device 10 via the electrical connector 306, as well as to one or more external devices, such as external device 332, via the I/O ports 326. For example, the power supply 324 may provide output power via the ports 326, such as via USB-A or USB-C ports, as well as over other ports that are capable of transmitting power. Accordingly, the power supply 324 can power external devices 332, which may include electronic devices (as described above), a smartphone, a computer peripheral (e.g. mouse, keyboard), lights, or external battery power supplies.

As shown in Figs. 7 and 8 an internal power source 312 is shown, and may provide limited power to the dock 300 when utility power is not available. In some embodiments, the internal power source 312 is a battery, such as a Lithium Ion (Li-Ion) or other battery types. The internal power source 312 may be configured to provide only limited power to the controller 302, which can limit the functions of the controller 302 to operate when not connected to utility power. For example, when operating via the internal power source 312, the electronic processor 320 may operate in a low-power mode, and may be configured to limit operations to maintaining any necessary processes (e.g. real time clocks, etc.), and/or providing basic feedback to a user to indicate that there is insufficient power to provide full functionality. For example, the electronic processor 320 may be configured to provide feedback to the user, such as via the indicator 310, which can indicate that the dock needs to be connected to a power source.

Turning now to Fig. 8, the dock 300 of Fig. 7 is shown with the utility power source 330 removed from the dock. An external power supply 334 is shown as connected to the controller 302 via the I/O ports 226. The external power source 334 may be connected to the controller 302 via non-traditional power input ports, such as USB-A and/or USB-C ports. In some embodiments, the I/O ports 326 may include a dedicated USB-A port configured to receive power from an external power supply. In other configurations, the I/O ports 326 may include dedicated USB-Type C, USB-Type B, USB Mini A, USB Mini B, USB Mini AB, USB Micro A, USB Micro B, USB Micro AB, or other USB ports configured to receive power from an external power supply. In other embodiments, the external power source 334 may be coupled to the controller via a USB-C port, USB-Type B port, USB Mini A port, USB Mini B port, USB Mini AB port, USB Micro A port, USB Micro B port, and/or a USB Micro A port within the I/O ports 326, which has been configured to allow for bi-directional power transfer. By using a USB-C port, a USB-Type B port, a USB Mini A port, a USB Mini B port, a USB Mini AB port, a USB Micro A port, a USB Micro B port, and/or a USB Micro A port no dedicated port is required to allow for power to be input to the dock 300.

In one embodiment, the external power source 334 is a rechargeable battery pack. The rechargeable battery pack may include one or more lithium-ion (Li-Ion) power cells for storing energy. The external power source 334 may further include one or more connection ports for connecting with a device, such as the dock 300. The connection ports may include USB-A ports, USB-C ports, or other connection ports for facilitating the transfer of power from the external power source 334. The external power source 334 may be a power supply associated with the electronic device 10. For example, where the electrical connector 306 is a USB-C connector, power may be provided from the electronic device 10 to the controller 302 via the electrical connector 306. In other embodiments, a connection may be made from the electronic device 10 to the I/O ports 326 to provide power from a power source of the electronic device 10 to the controller 302.

Thus, as shown in Fig. 8, the controller 302 may be powered via an external power source 334 connected via the I/O ports 326 when utility power is not available. This can allow a user to unlock the electronic device 10 from the dock 300 in a situation where utility power or even power from the electronic device 10 is lost. Specifically, by connecting the external power source 334 to the dock 300, the controller 302 can be powered, and can subsequently provide power, as necessary, to other components within the dock 300, such as the proximity device 304, the interface 310, and the electronic actuator 308. In some embodiments, the electronic processor 322 may be configured to control the power supply 324 based on the source of power to the dock 300. For example, the electronic processor 322 may be configured to restrict which components receive power when the dock 300 is powered via the external power source 334, such as the electronic actuator 308, the interface 310 and the proximity device 304. In still further embodiments, the electronic processor 322 may be configured to control the power supply 324 such that power from the external power source 334 is only used by the power supply 324 when utility power is not available. In another example, the electronic processor 320 may interface or control one or more of the I/O ports 326 to prevent power from being transmitted from the external power source 334 to the power supply 324.

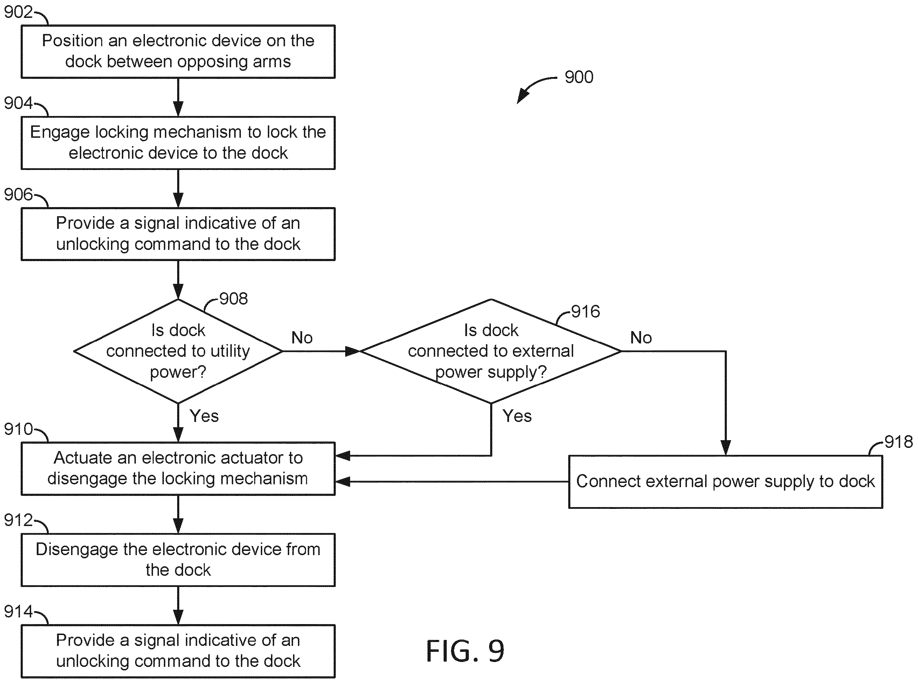

Fig. 9 identifies a method 900 of operating a dock. The method 900 describes the locking and unlocking of an electronic device to an electronically actuated docking device, such as the docks described herein. Any reference to specific docks described herein is intended to apply all dock embodiments described in this application.

To lock the portable electronic device to the dock, the portable electronic device 10 is positioned between locking members (such as opposing arms 16, 20) at process block 902. At process block 904, the locking members are positioned to secure the electronic device, and are locked into place.

At process block 906, the dock receives a signal indicating a request to unlock the electronic device from the dock. In one embodiment, the unlock request is received by the proximity device. As described above, the proximity device may wirelessly receive the signal from a remote apparatus, such as remote apparatus 150 described above. In alternative embodiments, the signal may be provided via an input in the dock, such as an interface (e.g. interface 310), or the electronic device 10. For example, a user may actuate the interface 310 to provide a signal to the controller to unlock the dock. The received signal is transmitted internally to the controller. At process block 908, the controller determines if the dock is connected to utility power (e.g. wall outlet). If the dock is determined be connected to utility power, an electronic actuator is actuated by the controller to disengage the locking members at process block 910. Disengaging the locking members may include unlocking the locking members, allowing them to move within the dock, such that the locking members can be disengaged from the electronic device 10.

The electronic device 10 is then disengaged from the dock at process block 912. The electronic device 10 may be disengaged from the dock by manually manipulating the locking members to allow for the electronic device 10 to be removed from the dock once the locking mechanisms have been disengaged. Finally, the electronic actuator is de-energized at process block 914. De-energizing the electronic actuator ensures that the electronic actuator does not need to remain energized at all times when the dock is unlocked. Returning now to process block 908, if the dock is determined to not be connected to utility power, the controller may determine if the dock is connected to an external power supply at process block 916. In some embodiments, the controller may be configured to use power provided by the internal power supply to determine if the dock is connected to power supplies other than the utility power. If the dock is determined to be connected to an external power source, the process proceeds with unlock the electronic device at process block 910.

If the dock is determined to not be connected to an external power supply at process block 916, the controller may provide an indication to a user that the user needs to connect an external power supply to the dock to complete the unlock process. In one embodiment, the indication may be provided via a feedback indicator, such as feedback indicator 152, 310 described above. For example, a visual or audio instruction or indication may be provided via the feedback indicator. In some embodiments, the internal power supply provides sufficient power to the controller to allow for the indication to be provided to the user. The user may then connect an external power supply to the dock at process block 918, at which point the process proceeds to process block 910, as described above.

While the above described docks described providing one or more electrical connections to the electronic device 10, it is contemplated that the above locking, unlocking, and power sourcing components described above may be applied to locking stations, which are configured to physically secure the electronic device, but do not provide any additional electrical connections to or from the electronic device 10.

Various features and advantages of the invention are set forth in the following claims.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A dock for a portable electronic device, the dock comprising:
a base;
a locking element configured to engage the portable electronic device, the locking element being configured to operate in a locked condition and an unlocked condition, and comprising an electronic actuator configured to unlock the locking element; and
a controller, the controller comprising:
an electronic processor;
a memory coupled to the electronic processor; and
a power supply in electric communication with a utility power input connection configured to receive a utility power input, and an external power source input connection configured to receive an external power input, wherein the power supply is configured to receive power from one of the utility power input connection and the external power source input connection and to provide power to one or more electrical components within the dock;
wherein the electronic processor is configured to:
receive an indication from a user to unlock the locking element;
determine if the utility power input is present at the utility power input connection; and
provide power to the electronic actuator from the power supply to unlock the locking element upon receiving the indication, wherein the external power input is provided to the power supply from the external power source input connection based on no utility power input being present at the utility power input connection.

2. The dock of claim 1, wherein the external power source input connection is one or more of a universal serial bus Type-A (USB-A) connection, a USB Type C connection, a USB-Type B connection, a USB Mini A connection, a USB Mini B connection, a USB Mini AB connection, a USB Micro A connection, a USB Micro B connection, and a USB Micro AB port connection.

3. The dock of claim 1, wherein the external power source input connection is configured to couple the dock to an external power source configured to provide the external power input.

4. The dock of claim 3, wherein the external power source is a battery pack.

5. The dock of claim 3, wherein the external power source is the electronic device.

6. The dock of claim 1, wherein the electronic device is a laptop computer.

7. The dock of claim 1, further comprising a wireless receiver configured to receive the indication to unlock the locking members, and preferably wherein the wireless receiver is configured to interface with a proximity device, and more preferably wherein the proximity device is one of a radio frequency identification (RFID) device, a near field communication (NFC) device, and a Bluetooth device.

8. The dock of claim 1, further comprising a feedback indicator in electrical communication with the controller and configured to provide an indication to a user to connect an external power supply to the external power source connector, and preferably wherein the feedback indicator provides the indication to the user based on the electronic processor determining that utility power is not present at the utility power input connection and further based upon receiving the indication to unlock the locking member, and more preferably wherein the dock further comprises an energy storage device configured to provide power to the controller to operate the feedback indicator.

9. The dock of claim 1, wherein the electronic processor is further configured to provide power to the electronic actuator from the power supply to unlock the locking element upon receiving the indication, wherein the utility power input is provided to the power supply from the utility power input based on the electronic processor determining that the utility power input is present at the utility power input connection.

10. A system for securing a portable electronic device, the system comprising:
an external power supply; and
a dock configured to interface with the portable electronic device, comprising:
a base;
a locking element configured to engage the portable electronic device, the locking element being configured to operate in a locked condition and an unlocked condition, and comprising an electronic actuator configured to unlock the locking element;
a proximity sensor configured to receive an indication to unlock the locking members;
a controller, the controller comprising:
an electronic processor;
a memory coupled to the electronic processor; and
a power supply in electric communication with a utility power input connection configured to receive a utility power input and an external power source input connection configured to receive an external power input from the external power supply, wherein the power supply is configured to receive power from one of the utility power input connection and the external power source input connection and to provide power to one or more electrical components within the dock;
wherein the electronic processor is configured to:
receive an indication from a user to unlock the locking element;
determine if the utility power input is present at the utility power input connection; and
provide power to the electronic actuator from the power supply to unlock the locking element upon receiving the indication, wherein the external power input is provided to the power supply from the external power source input based on no utility power input being present at the utility power input connection.

11. The system of claim 10, wherein the electronic actuator includes a motor or a solenoid.

12. The system of claim 10, wherein the external power source input connection is one or more of a universal serial bus Type-A (USB-A) connection, a USB Type C connection, a USB-Type B connection, a USB Mini A connection, a USB Mini B connection, a USB Mini AB connection, a USB Micro A connection, a USB Micro B connection, and a USB Micro AB port connection.

13. The system of claim 10, wherein the external power source input connection is configured to couple the dock to the external power supply, or wherein the dock further comprises a wireless receiver configured to receive the indication to unlock the locking members.

14. A method for securing a portable electronic device within a dock, the method comprising:
engaging a locking element to lock the portable electronic device into the dock, wherein the locking element is configured to operate in a locked condition and an unlocked condition, and comprising an electronic actuator configured to unlock the locking element;
receiving a signal, at an electronic processor, to unlock the locking element; and
determining, at the electronic processor, if the dock is connected to a utility power source;
when the dock is connected to a utility power source:
providing power to the electronic actuator from the utility power source,
actuating the electronic actuator to move the locking element to the unlocked condition; and
when the dock is not connected to the utility power source:
coupling an external power source to an external power source input connection of the dock;
providing power to the electronic actuator from the external power source; and
actuating the electronic actuator to move the locking element to the unlocked condition.

15. The method of claim 14, further comprising:
providing power to the electronic processor from the external power source; and
transmitting an instruction to the electronic actuator from the electronic processor to actuate the actuator based on the received indication.
